(19) Europäisches Patentamt / European Patent Office / Office européen des brevets

(11) **EP 3 224 611 B1**

(12) # FASCICULE DE BREVET EUROPEEN

(45) Date de publication et mention de la délivrance du brevet:
**05.09.2018 Bulletin 2018/36**

(51) Int Cl.:
***G01N 29/06*** *(2006.01)*    ***G01N 29/11*** *(2006.01)*
***G01N 29/265*** *(2006.01)*    ***G01N 29/44*** *(2006.01)*

(21) Numéro de dépôt: **15819846.5**

(22) Date de dépôt: **27.11.2015**

(86) Numéro de dépôt international:
**PCT/FR2015/053245**

(87) Numéro de publication internationale:
**WO 2016/083759 (02.06.2016 Gazette 2016/22)**

(54) **PROCÉDÉ DE DÉTECTION ET DE CARACTÉRISATION PAR ULTRASONS DE DÉFAUTS DANS UN MATÉRIAU HÉTÉROGÈNE**

VERFAHREN ZUR DETEKTION UND CHARAKTERISIERUNG VON DEFEKTEN IN EINEM HETEROGENEN MATERIAL MITTELS ULTRASCHALL

METHOD FOR DETECTING AND CHARACTERIZING DEFECTS IN A HETEROGENEOUS MATERIAL VIA ULTRASOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2014 FR 1461602**

(43) Date de publication de la demande:
**04.10.2017 Bulletin 2017/40**

(73) Titulaire: **Electricité de France**
**75008 Paris (FR)**

(72) Inventeurs:
• **PAUL, Nicolas**
**93100 Montreuil (FR)**

• **FILIOT, Pierre-Louis**
**75017 Paris (FR)**

(74) Mandataire: **Regimbeau**
**87 rue de Sèze**
**69477 Lyon Cedex 06 (FR)**

(56) Documents cités:
**EP-A2- 2 778 673    US-A1- 2007 006 651**

• **MUHAMMAD SAHIMI ET AL: "Propagation and localization of acoustic and elastic waves in heterogeneous materials: renormalization group analysis and numerical simulations", ACTA MECHANICA, SPRINGER-VERLAG, VI, vol. 205, no. 1-4, 24 avril 2009 (2009-04-24), pages 197-222, XP019723176, ISSN: 1619-6937**

**Description**

DOMAINE TECHNIQUE GENERAL ET CONTEXTE DE L'INVENTION

La présente invention concerne le contrôle non destructif de matériaux, et plus précisément la détection et la caractérisation par ultrasons de défauts dans un matériau hétérogène.

Les ultrasons sont couramment utilisés pour la mise en oeuvre de contrôles non destructifs de matériaux. On utilise pour ce faire un transducteur ultrasonore placé à la surface du matériau à examiner, qui émet des ondes ultrasonores dans le matériau. Ces ondes se propagent dans le matériau et sont réfléchies par celui-ci en fonction de sa structure. Le transducteur reçoit ces ondes réfléchies, et leur analyse permet de détecter d'éventuels défauts dans le matériau.

Cependant, pour un matériau hétérogène, c'est-à-dire un matériau polycristallin dont la taille de grain est de l'ordre de la longueur d'onde ultrasonore dans ce matériau, le phénomène de diffusion de l'onde ultrasonore par la structure du matériau devient prépondérant. Cette diffusion peut alors conduire à la génération d'un bruit de structure, c'est-à-dire à un signal ultrasonore d'amplitude non négligeable reçu par le transducteur et présentant des caractéristiques semblables à celles qu'émettrait une onde réfléchie par un défaut, entraînant ainsi une détérioration de la capacité de détection des défauts réellement présents dans le matériau.

En effet, dans la mesure où le bruit de structure présente des caractéristiques temporelles et spectrales similaires à celles des signatures de défaut constituant le signal utile, les approches classiques de traitement des signaux ultrasonores, par filtrage temporel ou fréquentiel, déconvolution ou projection sur des bases d'ondelettes s'avèrent inefficaces.

La demande de brevet US 2007/0006651 A1 décrit un procédé de contrôle non destructif au moyen d'ondes ultrasonores, basé sur la comparaison de l'amplitude du spectre fréquentiel d'une sélection du signal avec une amplitude de référence. Cette demande mentionne la possibilité d'effectuer les mesures à différentes positions et évoque la combinaison de ces mesures pour obtenir un signal de mesure moyen au sens spatial. Cependant, un tel procédé ne donne pas entièrement satisfaction, et le signal reste entaché de bruit.

PRESENTATION DE L'INVENTION

La présente invention a pour but de proposer un procédé de détection par ultrasons de défauts dans un matériau hétérogène qui permettent de réduire l'influence du bruit de structure qui entache les données récoltées.

A cet effet, il est proposé un procédé de détection et de caractérisation par ultrasons de défauts dans un matériau hétérogène, comprenant les étapes suivantes:

- émission d'ultrasons à partir d'un transducteur émetteur ultrasonore placé contre le matériau,
- acquisition par un transducteur récepteur ultrasonore en différentes positions par rapport audit matériau d'une pluralité de signaux temporels représentatifs de l'amplitude des ultrasons propagés dans le matériau en fonction du temps pour une position du transducteur récepteur ultrasonore,

le procédé comprenant les étapes de :

- détermination d'une fonction temporelle représentative d'une puissance spatialement moyenne des signaux temporels correspondant à différentes positions du transducteur récepteur ultrasonore, la fonction temporelle représentative de la puissance spatialement moyenne des signaux temporels étant de formule générale:

$$f(t) = \left( \beta \sum_z |x(z,t) - m(t)|^\alpha \right)^\gamma$$

avec $\alpha$, $\beta$ et $\gamma$ différents de zéro, $x(z,t)$ le signal temporel représentatif de l'amplitude du son propagé dans le matériau en fonction du temps pour une position z du transducteur récepteur ultrasonore, et $m(t)$ une fonction du temps,
- normalisation des signaux temporels au moyen de ladite fonction temporelle pour obtenir des signaux temporel normalisés,
- détection et caractérisation des défauts du matériau à partir desdits signaux temporels normalisés.

L'invention est avantageusement complétée par les caractéristiques suivantes, prises seules ou en une quelconque de leur combinaison techniquement possible:

- soit $m(t) = 0$, soit $m(t) = \frac{1}{N_z}\sum_z x(z,t)$, soit $m(t) = mediane_z\{x(z,t)\}$, et
- soit $\alpha = 2$ et $\gamma = 0,5$, soit $\alpha = 1$ et $\gamma = 1$, et
- $\beta = \frac{1}{N_z}$ ou $\beta = \frac{1}{N_z - 1}$ ou $\beta = 1$, avec $N_z$ le nombre de positions, $N_z$ étant supérieur à 2 ;
- on choisit $m(t) = 0$, $\alpha = 2$, $\gamma = 0,5$, $\beta = \frac{1}{N_z}$, la fonction temporelle étant un écart-type $\sigma(t)$ spatial des signaux temporels de différentes positions du transducteur récepteur, lesdites positions étant définies par leur altitude h et leur angle $\theta$:

$$\sigma\ (t) = \sqrt{\frac{1}{N_h N_\theta} \sum_{N_h} \sum_{N_\theta} x^2\ (h, \theta, t)}$$

- la normalisation d'un signal temporel x(z,t) au moyen de ladite fonction temporelle f(t) correspond à la division dudit signal temporel par ladite fonction temporelle :

$$x_{norm}(z,t) = \frac{x(z,t)}{f(t)}$$

- un signal temporel représentatif de l'amplitude du son propagé dans le matériau en fonction du temps pour une position du transducteur récepteur est une représentation spatio-temporelle de type A représentative de l'amplitude du son propagé dans le matériau en fonction du temps pour une position du transducteur récepteur ;
- la détection des défauts comprend une étape de détermination d'au moins une représentation spatiale de type C en sélectionnant pour chaque position de transducteur récepteur ultrasonore la valeur maximum dans le temps de la valeur absolue du signal temporel normalisé correspondant à cette position ;
- la détection des défauts comprend une étape de filtrage spatial de ladite au moins une représentation spatiale de type C au moyen d'un filtre spatial passe-bas ;
- la détection des défauts comprend une étape de comparaison avec un seuil de détection du rapport entre d'une part la valeur absolue de la différence entre la valeur prise par la représentation spatiale de type C pour une position et la moyenne des valeurs de la représentation spatiale de type C et d'autre part l'écart-type de des valeurs de la représentation spatiale de type C ;
- préalablement à la détermination de la fonction temporelle :

  - on détermine au moins une représentation spatiale de type C en sélectionnant pour chaque position de transducteur récepteur ultrasonore la valeur maximum dans le temps de la valeur absolue du signal temporel correspondant à cette position,
  - on applique à cette une représentation spatiale de type C un filtre spatial passe-bas bidimensionnel de prétraitement afin d'obtenir un niveau moyen du bruit de structure au niveau de chaque position de mesure,
  - on divise chaque signal temporel par le niveau moyen du bruit de structure au niveau de la position de mesure à laquelle est associé ledit signal temporel.

L'invention concerne également un produit programme d'ordinateur comprenant des instructions de code de programme pour l'exécution du procédé selon l'invention lorsque ledit programme est exécuté sur un ordinateur.

## PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels :

- Les figures 1a et 1b illustrent l'inspection d'un tube par une sonde, dédié respectivement à la détection de défauts longitudinaux et circonférentiels ;
- la figure 2 illustre l'évolution de l'écart-type du bruit de structure en fonction du temps d'arrivée ;
- les figures 3a, 3b et 3c sont des exemples de représentations de type C illustrant différentes étapes d'un prétraitement de réduction de la variabilité spatiale du bruit de structure ;
- la figure 4 est un exemple de représentation de type C correspondant à la sélection, pour chaque position de transducteur récepteur ultrasonore, de la valeur maximum dans le temps de la valeur absolue du signal temporel correspondant à cette position, avant la normalisation ;
- la figure 5 illustre la représentation de type C de la figure 4 après normalisation au moyen de l'écart-type spatial des signaux temporels,
- la figure 6 illustre une représentation de type C du rapport entre d'une part la valeur absolue de la différence entre la valeur de la représentation de type C de la figure 5 et de la moyenne de ces valeurs, et d'autre part l'écart-type des valeurs de la représentation de type C de la figure 5.

## DESCRIPTION DETAILLEE

A des fins d'illustration, la description qui suit sera faite dans le cadre du contrôle non destructif de tubes de pénétration de fond de cuve d'un réacteur nucléaire au moyen de transducteurs ultrasonores. Une telle acquisition des mesures des transducteurs est couramment effectuée, notamment pour la mise en oeuvre la technique dite de mesure du temps de trajet de diffraction, plus connue sous l'acronyme TOFD pour l'anglais "time of flight diffraction", dont le même protocole d'acquisition peut être mis en oeuvre pour la présente invention.

L'inspection de tubes de pénétration de fond de cuve d'un réacteur nucléaire présente plusieurs contraintes propres au domaine nucléaire. D'une part ce milieu est susceptible d'entraîner un vieillissement prématuré des matériaux, et d'autre part les conséquences d'une défaillance structurelle sont telles que tous les défauts devraient être détectés au plus tôt. Par ailleurs, l'accessibilité de ces tubes de pénétration est restreinte à leur intérieur, ce qui entraîne la nécessité d'inspecter en totalité l'épaisseur du tube depuis sa face interne, puisqu'une inspection depuis l'extérieur des tubes est difficilement envisageable.

Un tube de pénétration de fond de cuve est typiquement constitué d'inconel, c'est-à-dire d'un alliage à base principalement de nickel, de chrome, de fer, et contenant également du cuivre, le manganèse et le molybdène, ainsi qu'éventuellement d'autres composants en quantité généralement moindre. Il s'agit d'un matériau hétérogène dont la structure présente des grains d'une taille comparable à la longueur d'onde des ondes ultrasonores employées dans les contrôles non destructifs. A titre d'exemple, la fréquence des ondes ultrasonores généralement utilisées en contrôle non destructif peut s'étendre de 0,1 à 50 MHz, la bande 2-10 MHz étant la plus usitée. La longueur d'onde, dans cette bande, est donc comprise pratiquement, pour des métaux tels que l'acier ou l'aluminium, entre 3 mm et 0,5 mm. Il est à noter que le procédé n'est pas nécessairement restreint à un matériau hétérogène, mais trouve là une application avantageuse.

L'inspection de tels tubes se fait généralement au moyen de deux types de sondes. L'une des sondes est adaptée pour détecter les défauts longitudinaux, ce qui donne un signal longitudinal dit TOFD-L, tandis que l'autre des sondes est adaptée pour détecter les défauts circonférentiels, ce qui donne un signal circonférentiel dit TOFD-C. Les deux sondes peuvent par exemple parcourir la surface interne du tube de façon hélicoïdale.

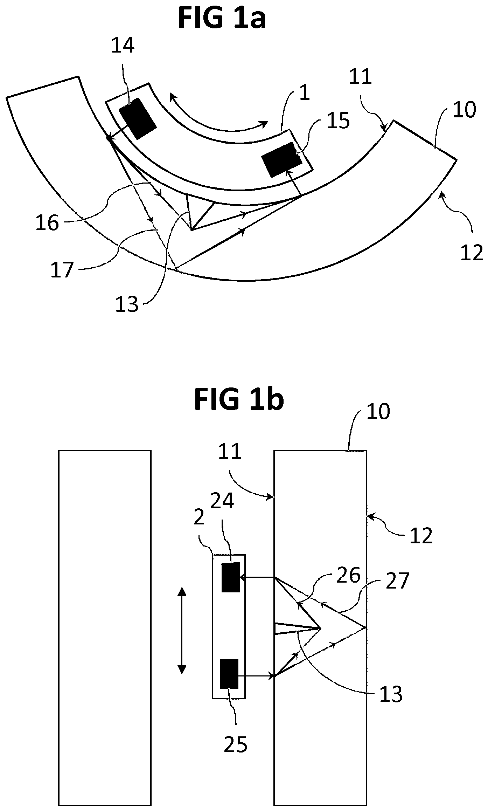

Les figures 1a et 1b illustrent le balayage d'un tube 10 par les deux types de sondes ultrasonores. La figure 1a montre ainsi une sonde 1 de type TOFD-L (longitudinal) inspectant un tube 10, disposée en face de la paroi interne 11 de ce tube 10, dont la sonde 1 reprend la courbure. Le tube 10 présente un défaut 13, représenté ici sous la forme d'une entaille. Le transducteur émetteur 14 et le transducteur récepteur 15 de la sonde 1 sont disposés de sorte d'être orientés l'un par rapport à l'autre perpendiculairement à l'axe longitudinal du tube 10. Ils se trouvent donc dans un plan perpendiculaire audit axe longitudinal du tube 10.

La figure 1b montre une sonde 2 de type TOFD-C (circonférentiel) inspectant le tube 10, présentant le défaut 13. La sonde TOFD-C 2 est disposée en face de la paroi interne 11 de ce tube 10, dont elle reprend la courbure. Le transducteur émetteur 24 et le transducteur récepteur 25 de la sonde TOFD-C 2 sont disposés de sorte d'être alignés dans l'axe longitudinal du tube 10. Ils se trouvent donc dans un plan parallèle audit axe longitudinal du tube 10.

Pour les deux types de sonde, le procédé de mesure est similaire, de même que le procédé de détection qui va être décrit. On peut donc utiliser l'un ou l'autre type de sonde, ou bien les deux. On émet des ultrasons à partir du transducteur émetteur ultrasonore 14, 24 placé contre le matériau. La sonde parcourt le tube, et, pour une pluralité de positions repérées par l'altitude h et l'angle $\theta$, un tir d'ondes ultrasonores est effectué, et le signal réfléchi est réceptionné par le transducteur récepteur ultrasonore 15, 25. Par exemple, pour les mesures, le pas en altitude peut être de 0,5 mm, le pas en rotation de 1,44°.

Les données ainsi acquises sont définies par une amplitude en fonction du temps liée à une altitude h et un angle $\theta$. On peut noter z la position définie par une altitude h et un angle $\theta$. On notera donc:

- $x_L(h, \theta, t)$ ou $x_L(z, t)$: les signaux temporels reçus par la sonde TOFD-L 1, et
- $x_C(h, \theta, t)$ ou $x_C(z, t)$ : les signaux temporels reçus par la sonde TOFD-C 2,

A partir de ces données, des représentations de plusieurs types peuvent être construites:

- la représentation A, ou A-scan, qui est un signal temporel pour une position de sonde, dont les données sont notées $x_{L \, ou \, C(h, \theta)}(t)$ ou $x_{L \, ou \, L(z)}(t)$;
- la représentation B, ou B-scan, qui peut être soit:

  • un signal en deux dimension angle/temps pour une altitude donnée : $x_{L \, ou \, C(h)}(\theta, t)$, ou
  • un signal en deux dimension altitude/temps pour un angle donnée : $x_{L \, ou \, C(\theta)}(h, t)$;

- la représentation C, ou C-scan, qui est un signal en deux dimension correspondant aux amplitudes maximales (en valeur absolue) mesurées pour chaque position de la sonde

$$y_{L \, ou \, C}(h, \theta) = \max_t |x_{L \, ou \, C}(h, \theta, t)|$$

ou

$$y_{L \, ou \, C}(z) = \max_t |x_{L \, ou \, C}(z, t)|$$

Pour plus de commodité, et dans la mesure où elles sont équivalentes, on omet par la suite les indices (L ou C) concernant l'aspect longitudinal ou circonférentiel de la sonde ayant acquis les signaux étudiés.

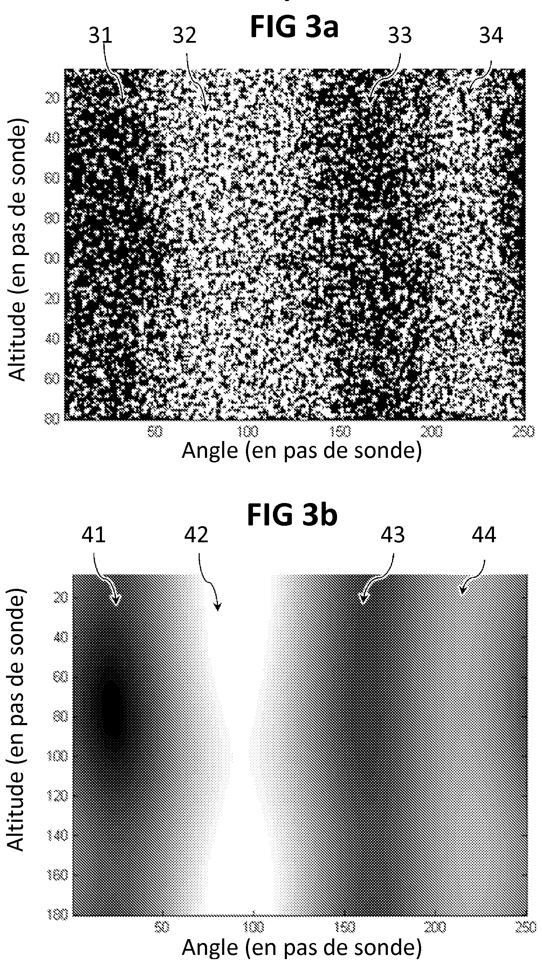

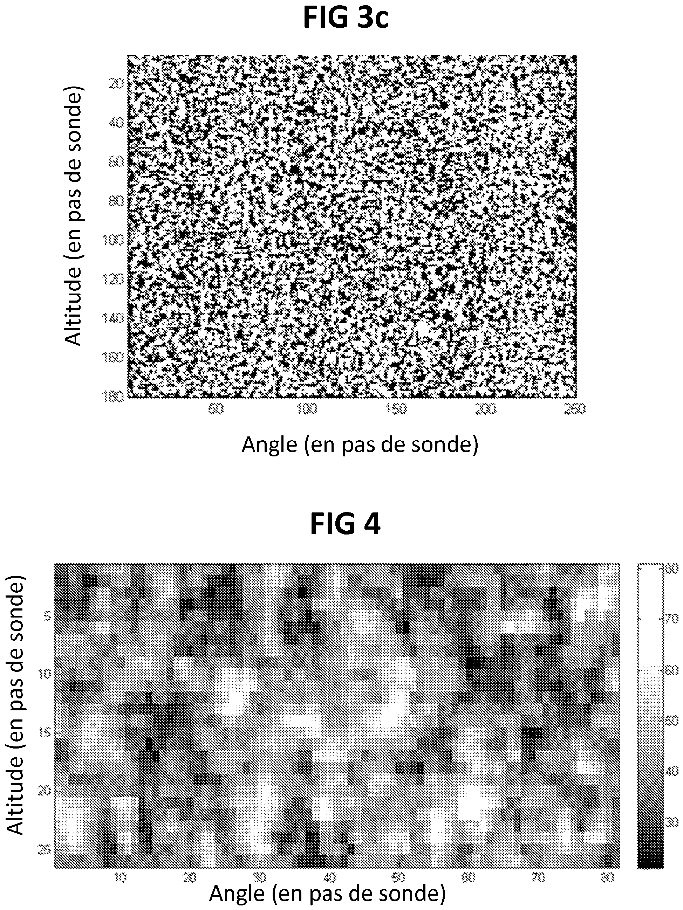

Préférentiellement, avant de poursuivre le procédé, il est mis en oeuvre un prétraitement afin de diminuer la variabilité spatiale du bruit de structure et ainsi améliorer l'efficacité des traitements ultérieurs. A cet effet, on détermine d'abord au moins une représentation spatiale de type C en sélectionnant pour chaque position de transducteur récepteur ultrasonore la valeur maximum dans le temps de la valeur absolue du signal temporel correspondant à cette position, comme indiqué plus haut. La figure 3a illustre une représentation de type C, ou C-scan, avec l'axe vertical représentant l'altitude, exprimée ici en pas de sonde de 0,5 mm, et l'axe horizontal les angles θ, exprimés ici en pas angulaires de 1,44°. Dans cette figure 3a, ainsi que dans les figures suivantes 3b et 3c, une teinte sombre indique une valeur faible, tandis qu'une teinte claire indique une valeur élevée. On distingue au moins quatre zones se distinguant par leur niveau moyen : une première zone 31 correspondant aux angles entre 0 et environ 50 pas angulaires de la sonde présente une valeur moyenne faible (teinte sombre), une seconde zone 32 correspondant aux angles entre environ 50 pas angulaires et environ 150 pas angulaires présente une valeur moyenne élevée (teinte claire), une troisième zone 33 correspondant aux angles entre environ 150 pas angulaires et environ 200 pas angulaires présente une valeur moyenne faible (teinte sombre), une quatrième zone 34 correspondant aux angles entre environ 200 pas angulaires et environ 250 pas angulaires présente une valeur moyenne élevée (teinte claire).

On applique à cette représentation spatiale de type C un filtre spatial passe-bas bidimensionnel de prétraitement afin d'obtenir un niveau moyen du bruit de structure au niveau de chaque position de mesure. Les deux fréquences de coupure, l'une pour l'altitude h et l'autre pour l'angle θ, sont choisies comme correspondant à l'inverse de la distance suivant laquelle le niveau de bruit de structure est supposé relativement constant. En reprenant l'exemple plus haut, on a pour fréquence de coupure et 1/50 pas de sondes ou 1/72 degrés$^{-1}$.

La figure 3b illustre l'image des valeurs moyennes de bruit de structure correspondant au C-scan de la figure 3a après son filtrage par un filtre spatial passe-bas bidimensionnel de prétraitement. On y retrouve les quatre zones se distinguant par leur niveau moyen : une première zone 41 correspondant aux angles entre 0 et environ 50 pas angulaires présente une valeur moyenne faible (teinte sombre), une seconde zone 42 correspondant aux angles entre environ 50 pas angulaires et environ 150 pas angulaires présente une valeur moyenne élevée (teinte claire), une troisième zone 43 correspondant aux angles entre environ 150 pas angulaires et environ 200 pas angulaires présente une valeur moyenne faible (teinte sombre), une quatrième zone 44 correspondant aux angles entre environ 200 pas angulaires et environ 250 pas angulaires présente une valeur moyenne élevée (teinte claire).

On obtient donc le niveau moyen du bruit de structure au niveau de chaque position de mesure. On divise ensuite chaque signal temporel, c'est-à-dire chaque A-scan, par le niveau moyen du bruit de structure au niveau de la position de mesure à laquelle est associé ledit signal temporel. En notant P(z) le niveau moyen du bruit de structure au niveau de la position de mesure z, et en reprenant la notation des A-scan indiquée plus haut, on a donc pour les A-scan ainsi prétraité :

$$x_{(z)}(t)_{prétraité} = \frac{x_{(z)}(t)}{P(z)}$$

Après cet éventuel prétraitement de la variabilité spatiale du bruit de structure dans les A-scan, on s'intéresse ensuite à la variabilité temporelle du bruit de structure dans les A-scan. Les représentations de type A correspondent à une pluralité de signaux temporels représentatifs de l'amplitude du son propagé dans le matériau en fonction du temps pour une position du transducteur récepteur ultrasonore 15, 25. C'est à partir de ces signaux temporels que va être mis en oeuvre la détection des défauts.

Dans les figures la et 1b, différents trajet d'ondes ultrasonores ont été représentés. Les ondes ultrasonores sont émises par le transducteur émetteur 14, 24 et pénètrent dans le tube 10 au niveau de sa paroi interne 11, puis se propagent dans le matériau dudit tube 10. Un premier trajet 16, 26 constitue un chemin court pour les ondes ultrasonores, qui sont diffractées par le défaut 13 en direction du transducteur récepteur 15, 25. Un second trajet 17, 27 constitue un chemin long pour les ondes ultrasonores, qui sont réfléchies par la paroi externe 12 du tube 10 en direction du transducteur récepteur 15, 25.

Différents trajets sont donc possibles pour les ondes ultrasonores reçues par le transducteur récepteur 15, 25, à partir desquels sont construits les différents signaux de mesure (A-scan, B-scan ou C-scan). Or, plus le trajet de l'onde ultrasonore dans le matériau est long, plus les interactions avec les grains du matériau sont importantes. Cela se traduit par une puissance du bruit de structure qui augmente avec le temps de trajet des ondes, donc avec le temps de réception de celles-ci.

Pour caractériser ce phénomène, on détermine une fonction temporelle représentative de la puissance spatialement moyenne des signaux temporels correspondant à différentes positions du transducteur récepteur contre le matériau en fonction du temps de propagation desdits signaux. On entend par puissance spatialement moyenne la moyenne dans l'espace, c'est-à-dire selon z ou (h,θ) d'une grandeur, en l'occurrence la puissance instantanée, à un temps t donné. La fonction temporelle est représentative de cette puissance spatialement moyenne, ce qui veut dire qu'elle peut être directement ou indirectement être liée à la puissance spatialement moyenne, et par conséquent peut être basée sur une grandeur ne correspondant pas à cette puissance spatialement moyenne, mais liée à celle-ci, telle que l'écart-type spatial. Dans tous les cas, cette fonction temporelle fait intervenir, pour chaque instant t, une somme sur l'espace prenant en compte les valeurs prises par les signaux temporels sur ledit espace à cet instant t.

Il est à noter que c'est bien la puissance qui est spatialement moyenne, et non le signal de mesure. Ainsi, la fonction temporelle en question est un signal dépendant du temps, qui à un instant t prend une valeur représentative de la moyenne des puissances à cet instant t des signaux temporels correspondant à différentes positions du transducteur récepteur ultrasonore.

Cette fonction temporelle est de formule générale:

$$f(t) = \left( \beta \sum_z |x(z,t) - m(t)|^\alpha \right)^\gamma$$

avec $\alpha$, $\beta$ et $\gamma$ différents de zéro, $x(z,t)$ le signal temporel représentatif de l'amplitude du son propagé dans le matériau en fonction du temps pour une position z (définie par l'altitude et l'angle) du transducteur récepteur ultrasonore, t étant le temps de trajet ou de propagation de l'onde ultrasonore, et $m(t)$ une fonction du temps.

On peut choisir:

- soit $m(t) = 0$, soit $m(t) = \frac{1}{N_z} \sum_z x(z,t)$, c'est-à-dire la moyenne du signal x sur l'espace, soit $m(t) = mediane_z\{x(z,t)\}$, et

- de préférence soit $\alpha=2$ et $\gamma=0,5$, ce qui correspond à l'écart-type, soit $\alpha=1$ et $\gamma=1$, ce qui correspond à la déviation absolue moyenne, et

- de préférence $\beta = \frac{1}{N_z}$ ou $\beta = \frac{1}{N_z-1}$ ou $\beta = 1$,

avec $N_z$ le nombre de positions prises en compte, supérieur à deux.

Ainsi, en prenant $m(t) = 0$, $\alpha=2$, $\gamma=0,5$, $= \frac{1}{N_z}$, la fonction temporelle est un écart-type $\sigma(t)$ spatial des signaux temporels de différentes positions du transducteur récepteur, lesdites positions étant définies par leur altitude h et leur angle $\theta$:

$$\sigma(t) = \sqrt{\frac{1}{N_h N_\theta} \sum_{N_h} \sum_{N_\theta} x^2 (h, \theta, t)}$$

De préférence, les différentes positions du transducteur récepteur à partir desquelles est déterminée la fonction temporelle correspondent à une portion du matériau étudié, et non à sa totalité. Une fonction temporelle est donc déterminée pour chacune de ces portions de matériau. Les portions de matériaux ainsi traitées peuvent être juxtaposées, comme dans le cas d'un traitement par bloc, mais de préférence, les portions de matériaux se recouvrent et sont chacune centrées sur une position de mesure, de sorte qu'il y a une fonction temporelle pour chaque position de mesure qui est déterminée à partir de la zone entourant ladite position sur le matériau.

L'étendue de la portion de matériau prise en compte dépend de la variabilité spatiale du bruit de structure, et donc de la variabilité spatiale de la puissance des signaux mesurés. A titre d'exemple, la zone entourant ladite position peut s'étendre de 100 points de mesure, ou positions, en hauteur, et de 100 points de mesure en angle. Avec un pas de mesure en hauteur de 0,5 mm et un pas angulaire de 1,44 degré, on obtient ainsi une portion de matériau s'étendant de 50 mm en hauteur et de 150 degrés en largeur.

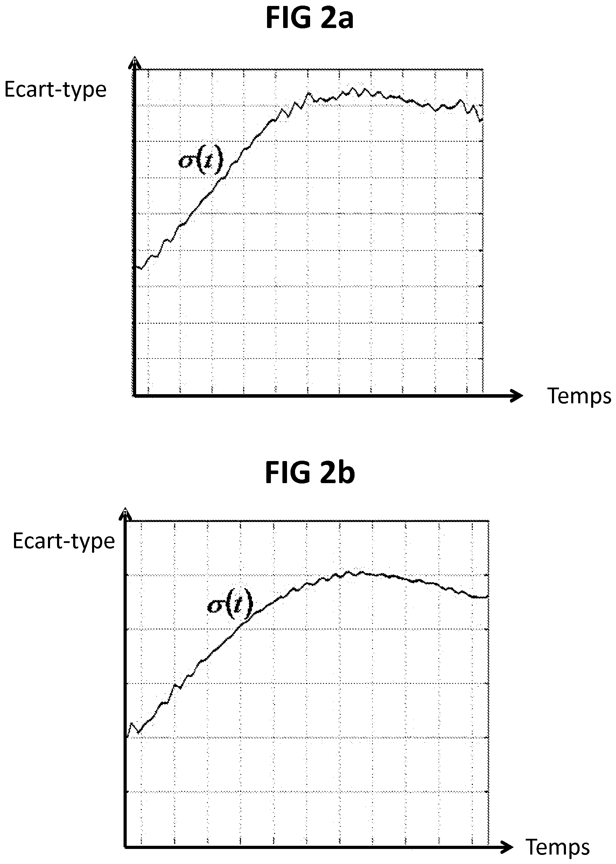

Les figures 2a et 2b illustrent l'écart-type spatial des signaux temporels en fonction du temps d'arrivée pour la sonde L (figure 2a) et la sonde C (figure 2b) pour une position à la surface d'un tube 10. Puisque le tube 10 ne comporte que peu de défauts, l'évolution temporelle de l'écart-type est essentiellement due au bruit de structure. On constate que l'écart-type augmente avec le temps d'arrivée du signal, au moins dans un premier temps, et donc avec le temps entre l'émission des ultrasons et leur réception par la sonde influence la puissance du bruit de structure.

En effet, comme expliqué plus haut, pour un faible temps de trajet d'une onde ultrasonore, peu de chemins de diffusion sont possibles. En revanche, à un temps de trajet élevé correspond de nombreux chemins de diffusion différents possibles pour l'onde ultrasonore. Le signal total reçu étant la somme des ondes ultrasonores diffusées, la puissance reçue sera pour les temps de trajet élevés, et ce malgré l'atténuation plus importante de chaque diffusion. L'atténuation des signaux s'observe cependant sur les temps de trajet les plus longs, et donc leur dispersion représentée par l'écart-type, comme le montre la légère décroissance finale des courbes des figures 2a et 2b.

La fonction temporelle représentative de la puissance spatialement moyenne des signaux temporels est ensuite utilisée pour normaliser les signaux temporels. Plus précisément, on divise l'amplitude d'un signal temporel $x(z,t)$ par ladite fonction temporelle $f(t)$:

$$\mathrm{x_{norm}}(z,t) = \frac{\mathrm{x}(z,t)}{\mathrm{f}(t)}$$

Ainsi, lorsque la fonction temporelle utilisée est l'écart-type $\sigma(t)$, on peut normaliser les signaux A-scans, qui sont des signaux temporels pour une position de sonde, dont les données sont notées $x_{(h,\theta)}(t)$, en omettant l'indice L ou C indiquant le type de défaut recherché par la sonde.

$$x_{(h,\theta)}^{norm}(t) = \frac{x_{(h,\theta)}(t)}{\sigma\ (t)}$$

La normalisation permet d'augmenter le contraste entre le signal utile dû à un éventuel défaut du matériau et le bruit de structure. On peut alors construire des B-scans normalisés à partir de ces A-scans normalisés. On peut également construire des C-scans normalisés à partir de ces A-scans normalisés, en sélectionnant pour chaque position de transducteur récepteur ultrasonore la valeur maximum dans le temps du signal temporel normalisé correspondant à cette position:

$$y^{norm}(h, \theta) = \max_t \left| \frac{x_{(h,\theta)}(t)}{\sigma \ (t)} \right|,$$

*ou*

$$y^{norm}(z) = \max_t \left| \frac{x_{(z)}(t)}{\sigma \ (t)} \right|$$

On obtient donc un signal dérivé de la normalisation des signaux temporels par la fonction temporelle représentative de la puissance spatialement moyenne des signaux temporels, en l'occurrence par l'écart-type dans cet exemple.

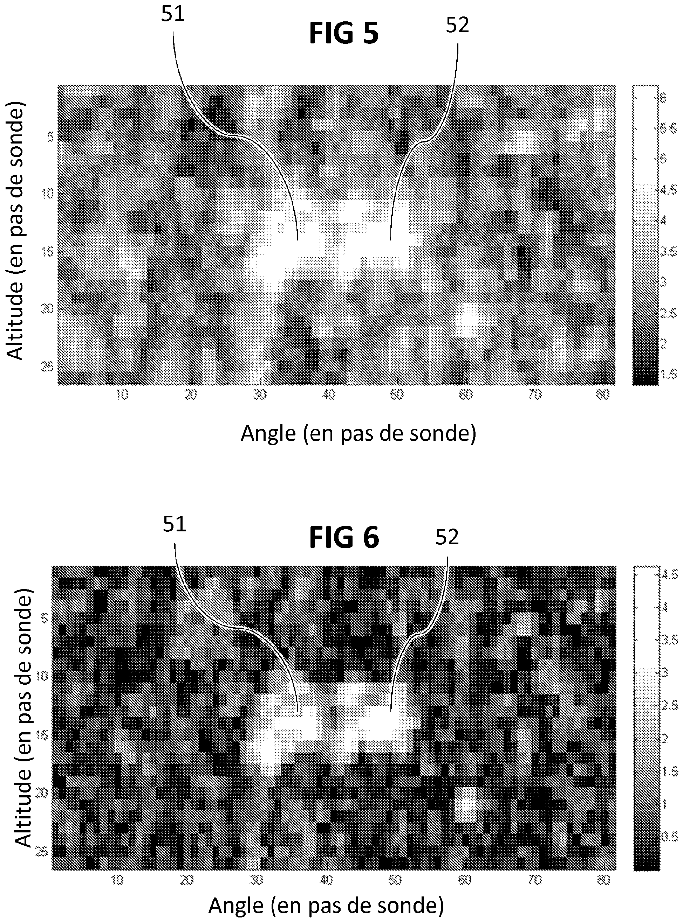

Les figures 4 et 5 illustrent la mise en oeuvre de la normalisation sur un exemple de représentation de type C, c'est-à-dire un C-scan, correspondant à la sélection, pour chaque position de transducteur récepteur ultrasonore, de la valeur maximum dans le temps de la valeur absolue du signal temporel correspondant à cette position. Comme précédemment, l'axe vertical représente l'altitude, exprimée ici en pas de sonde de 0,5 mm, et l'axe horizontal les angles, exprimés ici en pas angulaires de 1,44°. Dans cette figure 4, ainsi que dans la figure 5, une teinte sombre indique une valeur faible, tandis qu'une teinte claire indique une valeur élevée.

La figure 4 est donc un exemple de C-scan, avant cette normalisation. On constate une distribution des valeurs, visible par leurs teintes, qui semble aléatoire. En revanche, sur la figure 5, qui illustre la représentation de type C de la figure 4 après normalisation au moyen de l'écart-type spatial des signaux temporels d'une forme similaire à celle des figures 2a et 2b, on constate la mise en évidence de deux ensembles 51 et 52 au centre du C-scan se distinguant par des valeurs plus élevées que l'aire environnante. On a ainsi mis en évidence la présence de deux défauts correspondant à ces deux ensembles.

Il reste encore à détecter et à caractériser les défauts par la détection de leur signature dans le signal dérivé. A cet égard, la détection et la caractérisation des défauts est préférentiellement effectuée au moyen d'un signal spatial en deux dimensions tel que le C-scan, plutôt que d'un signal temporel ou spatio-temporel comme un B-scan. En effet, quel que soit le profil du défaut, par exemple qu'il s'agisse d'une entaille rectangulaire ou semi-elliptique, la projection du défaut sur le C-scan est un segment de droite, vertical pour une entaille longitudinale ou horizontal pour une entaille circonférentielle, ou bien encore une combinaison des deux, par exemple ce qui est le cas d'une fissure s'étendant en diagonale, à la fois circonférentiellement et en longitudinalement dans le tube. L'utilisation d'une représentation spatiale de type C, en deux dimensions spatiales, permet donc de s'affranchir du profil des défauts à détecter.

Les défauts tels que les entailles peuvent s'étendre sur plusieurs dizaines de millimètres. Les points du C-scan au niveau de cette signature sont donc inter-corrélés entre eux, c'est-à-dire qu'ils présentent une cohérence sur plusieurs positions spatialement adjacentes au niveau du défaut. En revanche, en l'absence de signature d'un défaut dans le C-scan, avec uniquement du bruit, le C-scan présente une bien plus faible inter-corrélation autour d'un point quelconque. Ainsi, chaque entaille peut être repérée par une persistance spatiale sur le C-scan suivant l'angle et/ou l'altitude où elle apparaît.

En outre, la configuration des sondes TOFD, de type C ou de type L, entraîne également des persistances spatiales. En effet, le signal ultrasonore reçu est impacté par le défaut tant que celui-ci est situé entre le transducteur émetteur 14, 24 et le transducteur récepteur 15, 25 (voir figures 1a et 1b). Par conséquent, la persistance du défaut peut être observée sur plusieurs positions (altitudes, angles) au voisinage d'un défaut sur le C-scan.

On exploite donc cette cohérence spatiale pour mettre en valeur le signal utile représentatif des défauts au détriment du bruit, moins corrélé spatialement. Un filtrage spatial exploitant cette corrélation spatiale est donc mis en oeuvre sur le signal dérivé de la normalisation, en appliquant un filtre spatial passe-bas au C-scan afin de le filtrer spatialement. Le filtre spatial passe-bas est conçu pour permettre d'atténuer la variabilité du bruit de structure, caractérisée par l'écart-type spatial de la distribution de ses amplitudes, tout en conservant le niveau de la signature d'un défaut.

Le filtre est dit spatial car il n'implique pas de considérations temporelles, le C-scan étant un signal purement spatial, sans variable temporelle. Le filtre spatial peut être un filtre à une dimension appliqué sur la composante angulaire θ, c'est-à-dire que pour chaque altitude h on filtre le signal normé $y_{(h)}^{norm}(\theta)$, et/ou sur la composante d'altitude h, c'est-à-dire que pour chaque altitude h on filtre le signal normé $y_{(\theta)}^{norm}(h)$.

La fréquence spatiale de coupure du filtre spatial passe-bas peut être choisie en fonction de la taille minimale $\Delta L_{min}$ des défauts que l'on cherche à détecter, comme étant l'inverse de cette taille minimale $\Delta L_{min}$. Ainsi, pour détecter des défauts d'au moins 10 mm, la fréquence spatiale de coupure est donc choisie comme étant inférieure à 100 m$^{-1}$. Le filtre spatial est typiquement un filtre de Butterworth.

Le filtre spatial peut également être un filtre spatial passe-bas en deux dimensions appliqué sur l'image C-scan. La réponse en fréquence en deux dimensions peut être choisie en fonction de la taille minimale des défauts recherchés, de même que pour un filtre spatial uni-dimensionnel.

Le C-scan ainsi filtré permet d'obtenir une carte de détection des défauts. En effet, la signature apparaît sur le C-scan, notamment par une amplitude différente des alentours, ce qui permet de les détecter, mais également de les localiser. En effet, un C-scan est une représentation spatiale, et chaque point est localisé par son altitude et son angle.

Une méthode simple de détection consiste à utiliser un seuil donné : tout dépassement de seuil par un ensemble de points adjacents du C-scan signale la présence d'un défaut.

Une méthode de détection un peu plus élaborée se base non pas sur les valeurs directement prises par le C-scan, $y^{filtré}(z)$, mais sur comparaison avec un seuil de détection du rapport entre d'une part la valeur absolue de la différence entre la valeur prise par la représentation spatiale de type C pour une position et la moyenne des valeurs de la représentation spatiale de type C et d'autre part l'écart-type de des valeurs de la représentation spatiale de type C. En reprenant les notations précédentes, on a donc :

$$\frac{\left|y^{filtré}(z) - moyenne\right|}{\gamma} > seuil$$

avec $y^{filtré}(z)$ la valeur du C-scan, éventuellement filtré, prise à la position z, *moyenne* la moyenne spatiale du C-scan, et $\gamma$ l'écart-type des valeurs du C-scan. Le seuil de détection peut par exemple être de 3.

Cette méthode permet de mettre en valeur de façon encore plus nette les défauts. A des fins d'illustration, la figure 6 illustre la mise en oeuvre de ce calcul, sans que l'étape de filtrage spatial mentionnée précédemment n'ai été mise en oeuvre, pour des raisons de simplicité de démonstration. La figure 6 montre ainsi un C-scan correspondant au rapport entre d'une part la valeur absolue de la différence entre la valeur de la représentation de type C de la figure 5 et de la moyenne de ces valeurs, et d'autre part l'écart-type des valeurs de la représentation de type C de la figure 5. On y retrouve les deux ensembles 51 et 52 de valeurs élevées, cependant mis en évidence par rapport aux zones qui les entourent, avec des valeurs 3 à 4 fois supérieures à celles-ci. Il est alors aisé de localiser les défauts.

Une fois le défaut localisé en altitude et en angle, la position du pic d'amplitude sur le A-scan normalisé correspondant à la position du défaut localisé permet de déterminer la profondeur du défaut.

Le procédé décrit est typiquement mis en oeuvre par un ordinateur pourvu d'un processeur et d'une mémoire. A cet effet, il est proposé un produit programme d'ordinateur comprenant des instructions de code de programme pour l'exécution du procédé selon l'invention lorsque ledit programme est exécuté sur un ordinateur.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de détection et de caractérisation par ultrasons de défauts dans un matériau hétérogène (10), comprenant les étapes suivantes:

   - émission d'ultrasons à partir d'un transducteur émetteur ultrasonore (14, 24) placé contre le matériau (10),
   - acquisition par un transducteur récepteur ultrasonore (15, 25) en différentes positions par rapport audit matériau (10) d'une pluralité de signaux temporels représentatifs de l'amplitude des ultrasons propagés dans le matériau en fonction du temps pour une position du transducteur récepteur ultrasonore,

   **caractérisé en ce que** le procédé comprend les étapes de :

   - détermination d'une fonction temporelle représentative d'une puissance spatialement moyenne des signaux temporels correspondant à différentes positions du transducteur récepteur ultrasonore (15, 25), la fonction temporelle représentative de la puissance spatialement moyenne des signaux temporels étant de formule générale:

$$f(t) = \left(\beta \sum_z |x(z,t) - m(t)|^\alpha\right)^\gamma$$

   avec $\alpha$, $\beta$ et $\gamma$ différents de zéro, x(z,t) le signal temporel représentatif de l'amplitude du son propagé dans le matériau en fonction du temps pour une position z du transducteur récepteur ultrasonore, et m(t) une fonction du temps,
   - normalisation des signaux temporels au moyen de ladite fonction temporelle pour obtenir des signaux temporel normalisés,
   - détection et caractérisation des défauts du matériau à partir desdits signaux temporels normalisés.

2. Procédé selon la revendication précédente, dans lequel :

   • soit *m(t)* = 0, soit $m(t) = \frac{1}{N_z}\sum_z x(z,t)$,

   soit m(t) = $mediane_z\{x(z,t)\}$, et
   • soit $\alpha$=2 et $\gamma$=0,5, soit $\alpha$=1 et $\gamma$=1, et

$$\bullet \; \beta = \frac{1}{N_z} \; \text{ou} \; \beta = \frac{1}{N_z - 1} \; \text{ou} \; \beta = 1, \text{avec N}_z$$

le nombre de positions, $N_z$ étant supérieur à 2.

3. Procédé selon la revendication précédente, dans lequel $m(t) = 0$, $\alpha=2$, $\gamma=0,5$, $\beta = \frac{1}{N_z}$, la fonction temporelle étant un écart-type $\sigma(t)$ spatial des signaux temporels de différentes positions du transducteur récepteur, lesdites positions étant définies par leur altitude h et leur angle $\theta$:

$$\sigma(t) = \sqrt{\frac{1}{N_h N_\theta} \sum_{N_h} \sum_{N_\theta} x^2 \; (h, \theta, t)}$$

4. Procédé selon l'une quelconque des revendications précédentes, dans lequel la normalisation d'un signal temporel x(z,t) au moyen de ladite fonction temporelle f(t) correspond à la division dudit signal temporel par ladite fonction temporelle:

$$x_{norm}(z,t) = \frac{x(z,t)}{f(t)}$$

5. Procédé selon l'une quelconque des revendications précédentes, dans lequel un signal temporel représentatif de l'amplitude du son propagé dans le matériau en fonction du temps pour une position du transducteur récepteur est une représentation spatio-temporelle de type A représentative de l'amplitude du son propagé dans le matériau en fonction du temps pour une position du transducteur récepteur.

6. Procédé selon l'une quelconque des revendications précédentes, dans lequel la détection des défauts comprend une étape de détermination d'au moins une représentation spatiale de type C en sélectionnant pour chaque position de transducteur récepteur ultrasonore la valeur maximum dans le temps de la valeur absolue du signal temporel normalisé correspondant à cette position.

7. Procédé selon la revendication précédente, dans lequel la détection des défauts comprend une étape de filtrage spatial de ladite représentation spatiale de type C au moyen d'un filtre spatial passe-bas.

8. Procédé selon l'une des revendications 6 ou 7, dans lequel la détection des défauts comprend une étape de comparaison avec un seuil de détection du rapport entre d'une part la valeur absolue de la différence entre la valeur prise par la représentation spatiale de type C pour une position et la moyenne des valeurs de la représentation spatiale de type C et d'autre part l'écart-type des valeurs de la représentation spatiale de type C.

9. Procédé selon l'une quelconque des revendications précédentes, dans lequel, préalablement à la détermination de la fonction temporelle :

    - on détermine au moins une représentation spatiale de type C en sélectionnant pour chaque position de transducteur récepteur ultrasonore la valeur maximum dans le temps de la valeur absolue du signal temporel correspondant à cette position,
    - on applique à cette une représentation spatiale de type C un filtre spatial passe-bas bidimensionnel de prétraitement afin d'obtenir un niveau moyen du bruit de structure au niveau de chaque position de mesure,
    - on divise chaque signal temporel par le niveau moyen du bruit de structure au niveau de la position de mesure à laquelle est associé ledit signal temporel.

10. Produit programme d'ordinateur comprenant des instructions de code de programme pour l'exécution du procédé selon l'une quelconque des revendications précédentes, lorsque ledit programme est exécuté sur un ordinateur

**Patentansprüche**

1. Verfahren zum Detektieren und zum Charakterisieren, durch Ultraschall, von Defekten in einem heterogenen Material (10), umfassend die folgenden Schritte:

    - Emittieren von Ultraschall ausgehend von einem Ultraschallsenderwandler (14, 24), der gegen das Material (10) platziert wird,
    - Erfassen, durch einen Ultraschallempfängerwandler (15, 25) in bezogen auf das Material (10) verschiedenen Positionen, einer Vielzahl von Zeitsignalen, die die Amplitude des sich in dem Material ausbreitenden Ultraschalls als Funktion der Zeit für eine Position des Ultraschallempfängerwandlers darstellen,

    **dadurch gekennzeichnet, dass** das Verfahren die Schritte umfasst des:

    - Bestimmens einer Zeitfunktion, die eine mittlere räumliche Leistung der Zeitsignale darstellt, welche verschiedenen Positionen des Ultraschallempfängerwandlers (15, 25) entspricht, wobei die Zeitfunktion, die die mittlere räumliche Leistung der Zeitsignale darstellt, die allgemei-

ne Formel besitzt:

$$f(t) = \left( \beta \sum_z |x(z,t) - m(t)|^\alpha \right)^\gamma$$

wobei $\alpha$, $\beta$ und $\gamma$ ungleich null sind, $x(z,t)$ das Zeitsignal ist, das die Amplitude des sich in dem Material ausbreitenden Schalls als Funktion der Zeit für eine Position $z$ des Ultraschallempfängerwandlers darstellt, und $m(t)$ eine Funktion der Zeit ist,

- Normalisierens der Zeitsignale mittels der Zeitfunktion, um normalisierte Zeitsignale zu erhalten,

- Detektierens und Charakterisierens der Defekte des Materials ausgehend von den normalisierten Zeitsignalen.

2. Verfahren nach dem vorstehenden Anspruch, wobei:

   • entweder $m(t) = 0$, oder $m(t) = \frac{1}{N_z}\sum_z x(z,t)$, oder $m(t) = median_z\{x(z,t)\}$, und

   • entweder $\alpha = 2$ und $\gamma = 0{,}5$, oder $\alpha = 1$ und $\gamma = 1$, und

   • $\beta = \frac{1}{N_z}$, oder $\beta = \frac{1}{N_z - 1}$, oder $\beta = 1$, wobei $N_z$ die Anzahl der Positionen ist, wobei $N_z$ größer als 2 ist.

3. Verfahren nach dem vorstehenden Anspruch, wobei $m(t) = 0$, $\alpha = 2$, $\gamma = 0{,}5$, $\beta = \frac{1}{N_z}$, wobei die Zeitfunktion eine räumliche Standardabweichung $\sigma(t)$ der Zeitsignale von verschiedenen Positionen des Empfängerwandlers ist, wobei die Positionen durch ihre Höhe $h$ und ihren Winkel $\theta$ definiert sind:

$$\sigma(t) = \sqrt{\frac{1}{N_h N_\theta} \sum_{N_h} \sum_{N_\theta} x^2(h, \theta, t)}$$

4. Verfahren nach einem der vorstehenden Ansprüche, wobei das Normalisieren eines Zeitsignals $x(z,t)$ mittels der Zeitfunktion $f(t)$ dem Dividieren des Zeitsignals durch die Zeitfunktion entspricht:

$$x_{norm}(z,t) = \frac{x(z,t)}{f(t)}$$

5. Verfahren nach einem der vorstehenden Ansprüche, wobei ein Zeitsignal, das die Amplitude des sich im Material ausbreitenden Schalls als Funktion der Zeit für eine Position des Empfängerwandlers darstellt, eine räumlich-zeitliche Darstellung vom Typ A ist, die die Amplitude des sich im Material ausbreitenden Schalls als Funktion der Zeit für eine Position des Empfängerwandlers darstellt.

6. Verfahren nach einem der vorstehenden Ansprüche, wobei das Detektieren der Defekte einen Schritt des Bestimmens von mindestens einer räumlichen Darstellung vom Typ C unter Auswählen, für jede Ultraschallempfängerwandlerposition, des Maximalwerts in der Zeit des Absolutwerts des dieser Position entsprechenden normalisierten Zeitsignals umfasst.

7. Verfahren nach dem vorstehenden Anspruch, wobei das Detektieren der Defekte einen Schritt des räumlichen Filterns der räumlichen Darstellung vom Typ C mittels eines räumlichen Tiefpassfilters umfasst.

8. Verfahren nach einem der Ansprüche 6 oder 7, wobei das Detektieren der Defekte einen Schritt des Vergleichens des Verhältnisses zwischen einerseits dem Absolutwert der Differenz zwischen dem durch die räumliche Darstellung vom Typ C für eine Position genommenen Wert und dem Mittel der Werte der räumlichen Darstellung vom Typ C, und andererseits der Standardabweichung der Werte der räumlichen Darstellung vom Typ C mit einer Detektionsschwelle umfasst.

9. Verfahren nach einem der vorstehenden Ansprüche, wobei vor dem Bestimmen der Zeitfunktion:

   - mindestens eine räumliche Darstellung vom Typ C unter Auswahl, für jede Ultraschallempfängerwandlerposition, des Maximalwerts in der Zeit des Absolutwerts des dieser Position entsprechenden Zeitsignals bestimmt wird,
   - auf diese eine räumliche Darstellung vom Typ C ein zweidimensionaler räumlicher Vorverarbeitungs-Tiefpassfilter angewendet wird, um einen Mittelwert des Gefügerauschens im Bereich jeder Messposition zu erhalten,
   - jedes Zeitsignal durch den Mittelwert des Gefügerauschens im Bereich der Messposition, der das Zeitsignal zugeordnet ist, dividiert wird.

10. Computerprogrammprodukt, das Programmcodeanweisungen für das Ausführen des Verfahrens nach einem der vorstehenden Ansprüche umfasst, wenn das Programm auf einem Computer ausgeführt wird.

## Claims

1. Method for detecting and characterising defects in a heterogeneous material by ultrasound (10), comprising the following steps:

   - emission of ultrasounds from an ultrasonic emitting transducer (14, 24) placed against the material (10),
   - acquisition by an ultrasonic receiving transducer (15, 25) at different positions with respect to said material (10) of a plurality of temporal signals representing the amplitude of the ultrasounds propagated in the material as a function of time for a position of the ultrasonic receiving transducer,

   **characterised in that** the method comprises the steps of:

   - determination of a temporal function representing a spatially-average power of the temporal signals corresponding to different positions of the ultrasonic receiving transducer (15, 25), the temporal function representing the spatially-average power of the temporal signals being of the general formula:

$$f(t) = \left( \beta \sum_z |x(z,t) - m(t)|^\alpha \right)^\gamma$$

   with $\alpha$, $\beta$ and $\gamma$ non-zero, $x(z,t)$ the temporal signal representing the amplitude of the sound propagated in the material as a function of time for a position $z$ of the ultrasonic receiving transducer, and $m(t)$ a function of time,
   - normalisation of the temporal signals by means of said temporal function to obtain normalised temporal signatures,
   - detection and characterisation of the defects of the material based on said normalised temporal signals.

2. Method according to the preceding claim, wherein:

   • either m(t) = 0, or $m(t) = \frac{1}{N_z}\sum_z x(z,t),$

   or $m(t) = median_z\{x(z,t)\}$, and
   • either $\alpha$=2 and $\gamma$=0.5, or $\alpha$=1 and $\gamma$=1, and

   • $\beta = \frac{1}{N_z}$ or $\beta = \frac{1}{N_z-1}$ or = 1, with $N_z$ the number of positions, $N_z$ being greater than 2.

3. Method according to the preceding claim, wherein

   $m(t) = 0, \alpha$=2, $\gamma$=0.5, $\beta = \frac{1}{N_z}$, the temporal function being a spatial standard deviation $\sigma(t)$ of the temporal signals of different positions of the receiving transducer, said positions being defined by their altitude h and their angle $\theta$:

$$\sigma(t) = \sqrt{\frac{1}{N_h N_\theta} \sum_{N_h} \sum_{N_\theta} x^2 (h, \theta, t)}$$

4. Method according to any one of the preceding claims, wherein the normalisation of a temporal signal $x(z,t)$ by means of said temporal function $f(t)$ corresponds to the division of said temporal signal by said temporal function:

$$x_{norm}(z,t) = \frac{x(z,t)}{f(t)}$$

5. Method according to any one of the preceding claims, wherein a temporal signal representing the amplitude of the sound propagated in the material as a function of time for a position of the receiving transducer is a A-type spatio-temporal representation representing the amplitude of the sound propagated in the material as a function of time for a position of the receiving transducer.

6. Method according to any one of the preceding claims, wherein the detection of the defects comprises a step of determination of at least one C-type spatial representation by selecting for each position of the ultrasonic receiving transducer the maximum value over time of the absolute value of the normalised temporal signal corresponding to this position.

7. Method according to the preceding claim, wherein the detection of the defects comprises a step of spatial filtering of said at least one C-type spatial representation by means of a low-pass spatial filter.

8. Method according to one of claims 6 or 7, wherein the detection of the defects comprises a step of comparison with a detection threshold of the ratio of, on the one hand, the absolute value of the difference between the value taken by the C-type spatial representation for a position and the average of the values of the C-type spatial representation and on the other hand the standard deviation of the values of the C-type spatial representation.

9. Method according to any one of the preceding claims, wherein, prior to the determination of the temporal function:

> - at least one C-type spatial representation is determined by selecting for each ultrasonic receiving transducer position the maximum value over time of the absolute value of the temporal signal corresponding to this position,
> - a pre-processing bi-dimensional low-pass spatial filter is applied to this C-type spatial representation in order to obtain an average level of the structural noise at each measurement position,
> - each temporal signal is divided by the average level of the structural noise at the measurement position with which said temporal signal is associated.

10. A computer program product comprising program code instructions for executing the method according to any one of the preceding claims, when said program is executed on a computer.

**FIG 1a**

**FIG 1b**

## FIG 2a

## FIG 2b

## FIG 3a

31    32    33    34

Altitude (en pas de sonde)

Angle (en pas de sonde)

## FIG 3b

41    42    43    44

Altitude (en pas de sonde)

Angle (en pas de sonde)

# FIG 3c

Angle (en pas de sonde)

# FIG 4

Angle (en pas de sonde)

51 **FIG 5** 52

Angle (en pas de sonde)

51 **FIG 6** 52

Angle (en pas de sonde)

**EP 3 224 611 B1**

## RÉFÉRENCES CITÉES DANS LA DESCRIPTION

**Documents brevets cités dans la description**

- US 20070006651 A1